# EUROPÄISCHE PATENTANMELDUNG

(11) **EP 0 806 522 A1**
(43) Veröffentlichungstag der Anmeldung: **12.11.1997**
(21) Anmeldenummer: 97107150.1
(22) Anmeldetag: 30.04.1997
(51) Int. Cl.: D21H 17/71, C08L 33/06

(54) **Dispersionen für die Papierimprägnierung enthaltend Wasserglas und/oder Dextrin**

(30) Priorität: 09.05.1996 DE 19618681
(71) Anmelder: Röhm GmbH, 64293 Darmstadt (DE)
(72) Erfinder: Dinklage, Horst, 64807 Dieburg (DE); Hauser, Hans, 64367 Mühltal (DE); Wiewicke, Klaus, 64572 Büttelborn (DE)

(57) **Zusammenfassung**

Die Erfindung betrifft eine Zusammensetzung zur Imprägnierung von Papier bestehend aus a) 20 - 80 Gew.-%, bezogen auf die Festsubstanz , einer Dispersion auf Acrylat oder Styrol/Acrylatbasis und b) 80 - 20 Gew.-% bezogen auf die Festsubstanz einer harten, verfestigenden Substanz, die z. B. ein Dextrin oder Wasserglas sein kann.

## Beschreibung

### Stand der Technik

Als Beschichtungsmaterialien für Holzwerkstoffe und Kunststoffe werden heute im großen Maßstab imprägnierte, einfarbige oder auch dekorativ bedruckte Papiere eingesetzt. Solche Papiere, die in der Regel von der Rolle verarbeitet werden, werden auch als Kunststoffurniere bezeichnet.

Zur Imprägnierung der Papiere werden in der Regel Mischungen von Acrylpolymerdispersionen oder Styrolacrylatdispersionen und Harnstoff-Formaldehydharzen oder Melamin-Formaldehydharzen verwendet (siehe z. B. DE-PS 29 03 172 = US 4 324 832 oder DE-U 91 02 6490). Diese Imprägnierungsmittel enthalten durch die Harnstoff-Formaldehydharze oder Melamin-Formaldehydharze Formaldehyd, das stets zu einem gewissen Anteil bei der Verarbeitung und auch bei der späteren Lagerung des Papiers frei wird. Aus Arbeits- und Umweltschutzgründen ist man bestrebt, die Formaldehydfreisetzung zu begrenzen oder möglichst ganz zu vermeiden.

WO 94 00 523 beschreibt formaldehydfreie Zusammensetzungen für die Papierimprägnierung auf der Basis von Butylacrylat/Ethylacrylat/Styrol-Copolymeren, die zusätzlich einen Binder enthalten. Dieser kann ein Polyvinylalkohol, Polyvinylacetat, Gelatine oder Stärke sein.

Die Verwendung von Wasserglas als Flammschutzzusatz ist bekannt. GB 1 415 082 beschreibt Styrol-Acrylat-Dispersionen enthaltend Glauber's Salz oder Perchlorsäure, Peressigsäure, Aluminiumtrifluorit, Wasserglas und optional Kaolin. Diese Zusammensetzungen können als wasserdichte und feuerfeste Beschichtungen oder als nicht korrosive Zusätze z. B. für Beton verwendet oder zur Herstellung von feuerfestem Schreibmaschinenpapier verwendet werden.

### Aufgabe und Lösung

Es besteht ein Bedarf an formaldehydarmen bzw. formaldehydfreien Zusammensetzungen zur Imprägnierung von Papier. Aufgabe der vorliegenden Erfindung war es daher eine verbesserte Zusammensetzungen bereitzustellen, die in der Imprägnierungsqualität, vor allem der Spaltfestigkeit der Papiers gute Resultate liefert. Die Aufgabe wird gelöst durch eine Zusammensetzung zur Imprägnierung von Papier bestehend aus
a) 20 - 80 Gew.-%, bezogen auf die Festsubstanz, einer Dispersion auf Acrylat oder Styrol/Acrylatbasis
b) 80 - 20 Gew.-% einer harten, verfestigenden Substanz

Die erfindungsgemäße Zusammensetzung ermöglicht eine effektive Papierimprägnierung. Durch den Ersatz von Harnstoff-Formaldehydharzen oder Melamin-Formaldehydharzen durch eine harte verfestigende Substanz, wie z. B. Dextrin oder Wasserglas, ist es möglich, je nach Rezeptur der Mischung, zu einer formaldehydfreie oder zumindest formaldehydarmen Imprägnierungszusammensetzung zu gelangen. Die Tatsache, daß Harnstoff-Formaldehydharze oder Melamin-Formaldehydharze Formaldehyd durch eine harte verfestigende Substanz nahezu vollwertig ersetzt werden können, war dabei überraschend.

### Ausführung der Erfindung

Die erfindungsgemäße Zusammensetzung besteht aus einer Dispersion auf Acrylat- oder Styrol oder Acrylatbasis und der harten verfestigenden Substanz. Letztere kann in Wasser gelöst oder auch als Festsubstanz zu gesetzt werden.

### a) Die Dispersion auf Acrylat- oder Styrol oder Acrylatbasis

Dispersionen, wie sie in an sich bekannter Weise in Kombination mit Harnstoff-Formaldehydharzen oder Melamin-Formaldehydharzen verwendet werden (siehe z. B. DE-PS 29 03 172 = US 4 324 832 oder DE-U 91 02 6490), sind geeignet. Die Dispersion ist mit einem Feststoffgehalt von 20 - 80 Gew.-%, bevorzugt 40 - 60 Gew.-% in der Zusammensetzung enthalten. Eine Dispersion auf Acrylatbasis kann in an sich bekannter Weise als Copolymerisat z. B. vorwiegend aus Methylmethacrylat und Butylacrylat als Monomeren aufgebaut sein. Als weitere Monomere können z. B. Methacrylsäure und/oder Methacrylamid enthalten sein. Es können z. B. 40 - 60 Gew.-% Methylmethacrylat, 30 - 50 Gew.-% Butylacrylat, 0 - 10 Gew.-% Methacrylamid und 0 - 5 Gew.-% Methacrylsäure enthalten sein. Ebenso geeignet ist eine Zusammensetzung mit 80 - 95 Gew.-% Ethylacrylat, 0 - 20 Gew.-% Methacrylamid und/oder 0 - 5 Gew.-% N-Methylolmethacrylamid. Durch das N-Methylolmethacrylamid setzt diese Dispersion allerdings in geringer Menge Formaldehyd frei. Die Menge ist jedoch weit geringer als bei Dispersionen die zusätzlich Harnstoff-Formaldehydharze oder Melamin-Formaldehydharze enthalten.

### b) Die harte, verfestigende Substanz

Die harte, verfestigende Substanz wird in einer Menge von 80 bis 20 Gew.-%, bevorzugt 60 bis 40 Gew.-% verwendet. Hierbei handelt es sich bevorzugt um eine Substanz, die in Kombination mit der Acrylat oder Styrolacrylat eine Papierimprägnierung ermöglicht, bei der eine Spaltfestigkeit im Bereich von 200 N oder bevorzugt darüber erhalten wird. Bevorzugt sind Dextrine und/oder Wasserglas.

Dextrine sind Abbauprodukte der Stärke, die z. B. bei unvollständiger Hydrolyse mit verdünnten Säuren hergestellt werden können.

Entsprechende Dextrine sind im Handel erhältlich. Gut geeignet ist sind z. B. Dextrine aus Mais- oder Weizenstärke. Bevorzugt wird Kartoffeldextrin.

Wasserglas ist die Bezeichnung für aus dem Schmelzfluß erstarrte, glasige, wasserlösliche Kalium- und Natriumsilicate (Salze von Kieselsäuren) bzw. deren viskose, wäßrige Lösungen (siehe z. B. RÖMPP Chemie Lexikon, Herausg. Falbe J. und Regitz, Georg Thieme Verlag Stuttgart - New York, 9. Auflage (1989), S. 5003) Wasserglas ist ebenfalls im Handel erhältlich.

Bei der Verwendung von Wasserglas tritt in Abhängigkeit von Qualität und Menge in der Regel eine leichte bis stärkere Gelbfärbung ein. Die Verwendung von erfindungsgemäßen Zusammensetzungen mit Wasserglas wird daher bevorzugt für die Imprägnierung von Papieren bei denen dies nicht störend ist. Dies ist z. B. bei Grundierfolien oder Gegenzugfolien der Fall. Bei der Verwendung von Dextrinen tritt in der Regel keine Gelbverfärbung oder Gelbstichigkeit der Imprägnierten Papiere auf. Zusammensetzungen mit Dextrinen werden daher bevorzugt für die Imprägnierung von Dekorpapiere bzw. -folien verwendet. Je nach Anwendungszweck können auch Mischungen verschiedener harter verfestigender Substanzen, also z. B. von Dextrinen und Wasserglas, verwendet werden.

Eine Erfindungsgemäße Zusammensetzung kann durch Zugabe der harten, verfestigenden Substanz als Feststoff oder Lösung bzw. Aufschlämmung zu der Dispersion hergestellt werden. Ein Verfahren zur Herstellung imprägnierter Papiere mit der erfindungsgemäßen Zusammensetzung kann analog zu bekannten Imprägnierverfahren ausgeführt werden. In einer Imprägnieranlage werden die Papiere zunächst einseitig mit der erfindungsgemäßen Zusammensetzung benetzt, damit die im Papier enthaltene Luft verdrängt wird. Anschließend kann das Papier in einem Tauchbad vollständig benetzt werden. Überschüssige Tränkflotte kann durch Walzen oder Rakeln abgepreßt bzw. abgestreift werden. Die feuchte Papierbahn kann z. B. einen Schwebetrockner durchlaufen, wodurch sichergestellt werden kann, daß die fertige Bahn den Trockenteil gleichmäßig und ohne Markierung verläßt. Geeignete Trockentemperaturen sind z. B. 140 bis 180° C. Die Binderauflage kann an den getrockneten Papieren durch die Ermittlung der prozentualen Gewichtszunahme geprüft werden. Sie soll für Flächenfolien im Bereich von ca. 40 - 50 % und für Kantenfolien im Bereich von ca. 50 bis 60 Gew.-% liegen.

Die Spaltfestigkeit der imprägnierten Papiere kann mit Hilfe einer Zugprüfmaschine bestimmt werden. Dazu wird die Unterseite einer auf ca. 3 x 3 cm großen Dekorfolie mit Cyanacrylatklebstoff (SICOMET® 77 von Henckel) bestrichen und auf ein 4 x 4 cm V4A Stahlplättchen geklebt und darauf wiederum ein V4A-Stempel mit 2 cm Durchmesser. Dieser wird für 5 min mit 0,5 kg belastet. Nach 8 h Lagerzeit wird der Prüfkörper waagerecht eingespannt und im 90° Winkel über eine Kette mit einer Zugprüfmaschine verbunden. Die zum Abreißen notwendige Kraft gemessen. Mit konventionellen Dispersionen imprägnierte Papiere bzw. Folien weisen Spaltfestigkeiten im Bereich von 250 - 400 N auf. Mit den erfindungsgemäßen Zusammensetzungen werden in der Regel etwas niedrigere, aber immer noch voll akzeptable Resultate im Bereich von 200 bis 350 N erzielt.

### BEISPIELE

Die folgende Tabelle 1 zeigt die erfindungsgemäßen Beispiele 1 -6 und das Vergleichsbeispiel 7 mit einer herkömmlichen formaldehydhaltigen Dispersion.

### Herstellung der Zusammensetzungen gemäß den Beispielen 1-7

Die Bestandteile der Zusammensetzungen 1 - 7 wurden in angegebenen Gewichtsverhältnissen unter Rühren in vollentmineralisiertem Wasser gemischt bzw. gelöst, so daß der Feststoffgehalt jeweils ca. 35 Gew.-% betrug.

### Bestandteile der Dispersionen:

Dispersion A: Copolymer aus 50 Gew.-% Butylacrylat, 40 Gew.-% Methylmethacrylat und 10 Gew.-% Methacrylamid mit einer Glastemperatur T_{g} von ca. 31°C (Die Glastemperatur T_{g} kann z. B. der Literaturstelle Brandrup und E.H. Immergut, "Polymer Handbook" Interscience 1966, S. III-61 bis III-63, oder dem "Kunststoffhandbuch", Band IX, Herausgeber R. Vieweg und F. Esser, Carl-Hanser-Verlag, München 1975, S. 333 bis 339 und T.G. Fox in "Bull. Am. Physics Soc.", Vol. I, (3) S. 123 (1956) entnommen werden).
Dispersion B: Copolymer aus 65 Gew.-% Methylmethacrylat und 35 Gew.-%Butylacrylat mit einer Glastemperatur T_{g} von 49°C.
Wasserglas: Wasserglas K28® (Fa. Woellner)
Dextrin: Kartoffeldextrin (Fa. Südstärke)
Harnstoffharz: Harnstoff-Formaldehydharz Typ Kaurit® 420 (BASF)

### Imprägnierungsverfahren:

Es wurden jeweils Rohpapiere, weiß, einseitig glatt, 203 g/m² zur Imprägnierung mit den angegebenen Dispersionen verwendet. Dazu wurde die glatte Seite luftblasenfrei auf die Dispersion gelegt bis diese eingezogen war. Anschließend wurde das Papier umgedreht und unter die Dispersionsoberfläche gedrückt. Die überschüssige Dispersion wurde mit einer Leimpresse abgequetscht. Das feuchte Papier wurde dann für die jeweils angegebenen Zeiten im einem Trockner bei eingeschaltetem Ventilator und geöffneter Luftklappe getrocknet. Anschließend wurden die Papiere für 24 h bei Normklima (23 °C, 50 % relative Luftfeuchtigkeit) gelagert.

### Bestimmung der Binderauflage:

Die Binderauflage wurde als prozentuale Gewichtszunahme des imprägnierten Papiers gegenüber dem Rohpapier ermittelt.

### Bestimmung der Spaltfestigkeit:

Die Spaltfestigkeit der imprägnierten Papiere wurde mit Hilfe einer Zugprüfmaschine bestimmt. Dazu wurde die Unterseite der auf ca. 3 x 3 cm zurechtgeschnittenen imprägnierten Papiere mit Cyanacrylatklebstoff (SICOMET® 77 von Henckel) bestrichen und auf ein 4 x 4 cm großes Plättchen aus V4A-Stahl geklebt. Darauf wurde wiederum ein Stempel aus V4A-Stahl mit 2 cm Durchmesser geklebt. Dieser wird für 5 min mit 0,5 kg belastet. Nach 8 h Standzeit wurde der so erhaltene Prüfkörper waagerecht eingespannt und im 90° Winkel über eine Kette mit einer Zugprüfmaschine verbunden. Die zum Abreißen notwendige Kraft wurde gemessen.

**Tabelle 1**

| Beispiel Nr. | 1 | 2 | 3 | 4 | 5 | 6 | 7 |
|---|---|---|---|---|---|---|---|
| Zusammensetzung in Gewichtsteilen | | | | | | | |
| Dispersion A | 6 | 4 | - | - | 2 | 2 | 6 |
| Dispersion B | - | - | 2,5 | 2 | - | - | - |
| Wasserglas | 4 | 6 | | 1 | 1 | 1 | |
| Dextrin | - | - | 1 | 1 | 1 | 1 | |
| Harnstoffharz | | | | | | | 4 |
| Trocknung bei 160°C in min | 1 | 1 | 3 | 3 | 1,5 | 1 | 3 |
| Binderauflage in % | 34,3 | 31,8 | 34,5 | 40,8 | 47,2 | 47,1 | 46,8 |
| Spaltfestigkeit in N | 230 | 200 | 240 | 250 | 300 | 270 | 290 |

## Patentansprüche

1. Zusammensetzung zur Imprägnierung von Papier bestehend aus
a) 20 - 80 Gew.-%, bezogen auf die Festsubstanz, einer Dispersion auf Acrylat oder Styrol/Acrylatbasis
b) 80 - 20 Gew.-% Dextrin und/oder Wasserglas.

2. Zusammensetzuug nach Anspruch 1, dadurch gekennzeichnet, daß 40 bis 60 Gew.-% Dextrin und/oder Wasserglas enthalten sind.

3. Zusammensetzung nach Anspruch 1 oder 2, dadurch gekennzeichnet, daß die harte, verfestigende Substanz ein Kartoffeldextrin ist.

4. Zusammensetzung nach einem oder mehreren der Ansprüche 1 bis 3, dadurch gekennzeichnet, daß die Dispersion eine Dispersion auf Acrylatbasis ist und ein Copolymer aus überwiegend Methylmethacrylat und Butylacrylat als Monomeren ist.

5. Zusammensetzung nach Anspruch 4, dadurch gekennzeichnet, daß die Dispersion auf Acrylatbasis ein Copolymer aus
40 - 60 Gew.-% Methylmethacrylat und
30 - 50 Gew.-% Butylacrylat
0 - 10 Gew.-% Methacrylamid ist,
wobei sich die Bestandteile zu 100 Gew.-% addieren.

6. Zusammensetzung nach einem oder mehreren der Ansprüche 1 bis 4, dadurch gekennzeichnet, daß die Dispersion auf Acrylatbasis ein Copolymer aus
80 - 95 Gew.-% Ethylacrylat und
0 - 10 Gew.-% Methacrylamid und
0 - 5 Gew.-% N-Methylolacrylamid
ist, wobei sich die Bestandteile zu 100 Gew.-% addieren.

7. Zusammensetzung nach einem oder mehreren der Ansprüche 1 bis 6, dadurch gekennzeichnet, daß die Dispersion eine Dispersion auf Styrol/Acrylatbasis ist und ein Copolymer aus
40 - 60 Gew.-% Styrol
30 - 50 Gew.-% Butylacrylat
0 - 10 Gew.-% Methacrylamid
ist, wobei sich die Bestandteile zu 100 Gew.-% addieren.

8. Verfahren zur Imprägnierung von Papier, dadurch gekennzeichnet, daß eine Zusammensetzung nach einem oder mehreren der Ansprüche 1 bis 7 als Imprägnierungsmiftel eingesetzt wird.

9. Verwendung einer Zusammensetzung nach einem oder mehreren der Ansprüche 1 bis 7 zur Imprägnierung von Papier.
